# EUROPEAN PATENT SPECIFICATION

(11) **EP 2 727 464 B1**
(45) Date of publication and mention of the grant of the patent: **05.04.2017**
(21) Application number: 13190302.3
(22) Date of filing: 25.10.2013
(51) Int. Cl.: A01K 23/00

(54) **Pet feces collection device**
Tierkotsammelvorrichtung
Dispositif de collecte d'excréments d'animaux de compagnie

(30) Priority: 31.10.2012 TW 101221097
(43) Date of publication of application: 07.05.2014
(73) Proprietor: Lee, Shu-Kuang, 40247 Taichung City (TW)
(72) Inventor: Lee, Shu-Kuang, 40247 Taichung City (TW)
(74) Representative: Lang, Christian

(56) References cited:
- WO-A1-03/090524
- DE-U1- 8 418 327
- US-A1- 2004 144 334
- US-A1- 2006 124 076

## Description

### BACKGROUND OF THE INVENTION

### (a) Field of the Invention

The present invention relates to a collection device, and more particularly, to a pet feces collection device.

### (b) Description of the Prior Art

The conventional pet feces collection device is disclosed in Taiwan utility Model No. M427004 and generally comprises a frame with a notch. A recess is defined in the frame and two holes defined through the inner face of the recess. A support portion extends from the frame and communicates with the notch. A strip has one end wrapped in the recess and extends through the two holes. The other end of the strip extends beyond the frame. A first adjustment member and a second adjustment member are connected between the two ends of the strip, wherein the second adjustment member has a snap button. A first cable and a second cable both are a loop-like cable and are connected to the frame.

However, when using the device, the tail of the pet such as a dog is not located in the notch and the strip goes beyond the tail and is connected to the snap button on the second cable. There are two connection points on the pet's back and waist, in other words, the first and second adjustment members are located on a straight line, such that when the dog tail swings, the frame is easily loosened.

The bag has to be mounted to the frame by its opening and the portion defining the opening is pulled through the gap between the recess and the strap to a certain distance to let the strip be located outside of the opening of the bag. The first adjustment member is then pulled to tie the opening of the bag to the recess of the frame. The first cable goes through the second cable, and the first or second cable is hooked to the snap button. Finally, the second adjustment member is moved to set the final position. The steps are complicated and inconvenient.

Some dogs such as the German Shepherds, Peruvian Inca Orchids, Sloughis, Whippet and Italian Greyhounds, their tails normally extend downward and the position of anus is located lower, so that the conventional feces collection device tends to slip downward because the first and second adjustment members are located on a straight line. Examples for pet feces collection devices are disclosed in US 2006/0124076 A1, WO 03/090524 A1 and US 2004/144334 A1. The devices described in these documents use complex strap configurations to properly arrange the pet feces collection device at the pet. However, the strap arrangements are very complex and accordingly not convenient in use. Moreover, reliable arrangement at the proper place is not guaranteed at all.

The present invention intends to provide a pet feces collection device that improves the shortcomings of the conventional pet feces collection device.

### SUMMARY OF THE INVENTION

The present invention relates to a pet feces collection device according to claim 1 that comprises a plate having a through hole. A recess is defined in the top edge of the plate and the tail of a pet extends through the recess. The plate has two top wings and the recess is located between the two top wings. Each of the two top wings has a positioning portion. A strip has two ends respectively connected to the two respective positioning portions of the two top wings. The middle portion of the strip extends through an adjustment unit to form an enclosed mounting portion and two restriction sections. The adjustment unit is located between the mounting portion and the two restriction sections which are connected to the plate. A mounting area is defined by the mounting portion and a restriction area is defined between the adjustment unit, the two restriction sections and the two top wings of the plate. A left-leg belt and a right-leg belt are connected to two corners of the lower portion of the plate. Each of the left-leg belt and the right-leg belt has a connection member connected thereto which is connected to the mounting portion of the strip. The mounting portion is mounted to the pet and the plate is located at the bottom of the pet. The tail extends through the restriction area. The two respective connection members of the left-leg belt and the right-leg belt extend between two rear legs of the pet and are connected to the mounting portions. The through hole of the plate is aligned with anus of the pet.

Multiple clip portions are formed around the through hole. A bag is accommodated within the through hole and the extension portion. The periphery of the opening of the bag is secured by the clip portions. The feces are directly collected in the bag.

The primary object of the present invention is to provide a pet feces collection device which is able to be used to any type of dogs and the device is not loosened.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is an exploded view to show the pet feces collection device of the present invention;
Fig. 2 is a perspective view to show the pet feces collection device of the present invention;
Fig. 3 is a cross sectional view taken along the line A-A in Fig. 2;
Fig. 4 is a cross sectional view taken along the line B-B in Fig. 2;
Fig. 5 shows the use status of the pet feces collection device of the present invention;
Fig. 6 is an exploded view to show another embodiment of the pet feces collection device of the present invention, and
Fig. 7 shows the use status of the pet feces collection device in Fig. 6 of the present invention.

### DETAILED DESCRIPTION OF THE PREFERRED EMBODIMENT

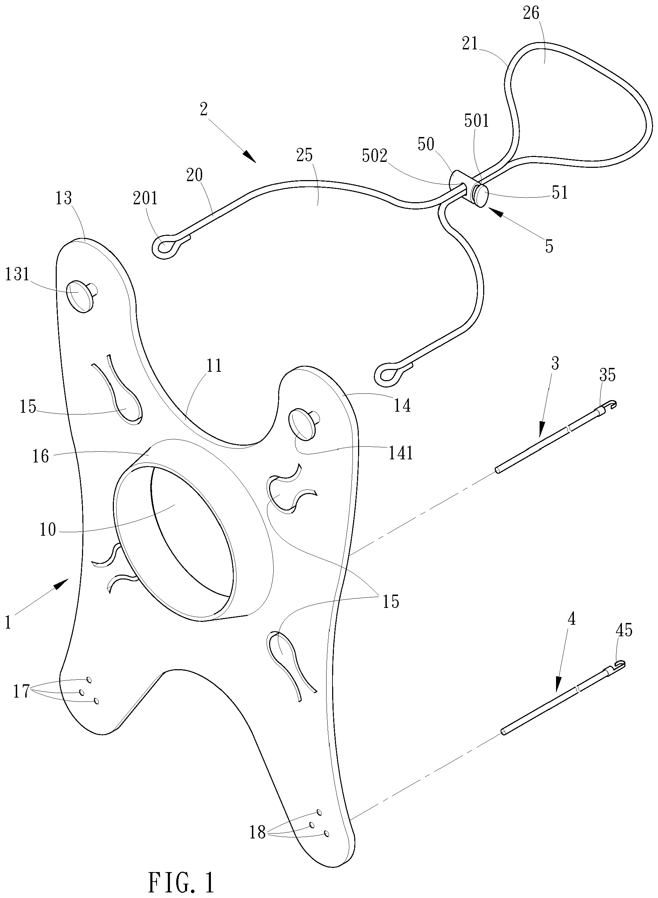

Referring to Figs. 1 to 6, the pet feces collection device of the present invention comprises a plate 1 having a through hole 10, a strip 2 connected to the top of the plate 1, at least one adjustment unit 5 movably connected to the strip 2, a left-leg belt 3 and a right-leg belt 4 connected to the lower end of the plate 1, and two positioning members 35, 45 connected to the left-leg belt 3 and the right-leg belt 4.

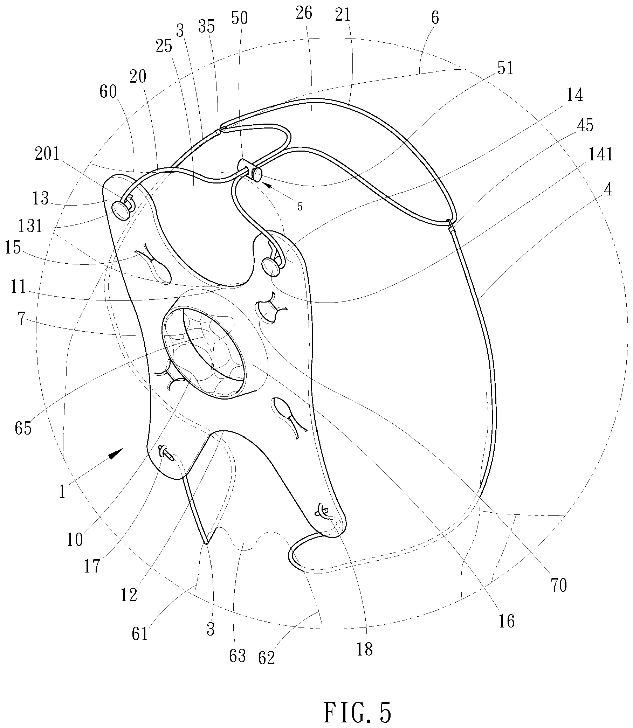

A recess 11 is defined in the top edge of the plate 1 and sized so that the tail 60 of a pet 6 may extend therethrough as shown in Fig. 5. The through hole 10 does not communicate with the recess 11. The plate 1 has two top wings 13, 14 and the recess 11 is located between the two top wings 13, 14. Each of the two top wings 13, 14 has a positioning portion 131/141 which can be a protrusion, a protrusion with an enlarged head, or a slot so as to be connected with two ends of the strip 2. A tubular extension portion 16 extends from the periphery of the through hole 10 and multiple clip portions 15 are formed around the through hole 10. The periphery 70 of the opening of a bag 7 is inserted into the slots of the clip portions 15 and securely positioned by the clip portions 15, and the bag 7 is accommodated within the through hole 10 and the extension portion 16. By this way, the bag 7 is not dragged and separated by other objects. Another recess 12 is defined in the lower portion of the plate 1 and two corners of the lower portion of the plate 1 each have three apertures 17/18 defined therethrough.

The strip 2 has two ends which are formed as two loops 201 which are respectively connected to the two respective positioning portions 131, 141 of the two top wings 13, 14 directly or indirectly. The strip 2 can be made by resilient band, belt, rope or wire. The middle portion of the strip 2 extends through an adjustment unit 5 to form an enclosed mounting portion 21 and two restriction sections 20, wherein the adjustment unit 5 is located between the mounting portion 21 and the two restriction sections 20 which are connected to the plate 1. A mounting area 26 is defined by the mounting portion 21. A restriction area 25 is defined between the adjustment unit 5, the two restriction sections 20 and the two top wings 13, 14 of the plate 1. By moving the adjustment unit 5, the size and length of the mounting portion 21 and the two restriction sections 20 can be adjusted.

In other words, the sizes of the restriction area 25 and the mounting area 26 can be adjusted by moving the adjustment unit 5.

The left-leg belt 3 and the right-leg belt 4 can be made by resilient band, belt, rope or wire. One end of each of the left-leg belt 3 and the right-leg belt 4 is connected to the apertures 17/18 of the lower portion of the plate 1 directly or indirectly. The other end of each of the left-leg belt 3 and the right-leg belt 4 has a positioning member 35/45. The two respective connection members 35, 45 of the left-leg belt 3 and the right-leg belt 4 extend between two rear legs 61, 62 of the pet 6 and are connected to the mounting portions 21. Therefore, the mounting area 26 is pulled to be a triangular area as shown in Fig. 5 to be secured.

The adjustment unit 5 comprises a body 50 with a room 501 defined therein, a movable member 51 located in the room 501, and a spring (not shown) biased between the body 50 and the movable member 51. The body 50 has a passage 502 and the movable member 51 has another passage (not shown), the adjustment unit 5 is movable along the strip 2 when the passage 502 of the body 50 and passage of the movable member 51 are in alignment with each other.

When in use, the two mounting portion 21 extend through the adjustment unit 5, and the loops 201 are connected to the positioning portions 131, 141 on the plate 1 so as to secure the strip 2 to the plate 1. The enclosed restriction area 25 is formed between the adjustment unit 5 and the plate 1. The left-leg belt 3 and the right-leg belt 4 are respectively connected to the apertures 17, 18 to form an X-shaped arrangement to ensure that the left-leg belt 3 and the right-leg belt 4 are secured to the plate 1.

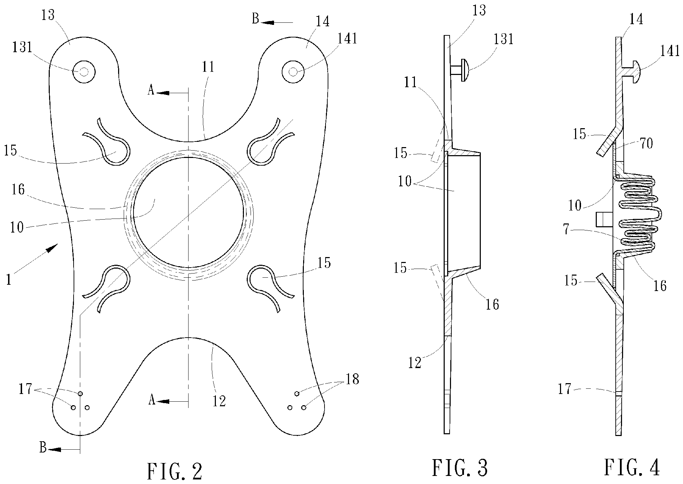

The periphery 70 of the opening of a bag 7 is inserted into the slots of the clip portions 15 and securely positioned by the clip portions 15, and the bag 7 is accommodated within the through hole 10 and the extension portion 16 as shown in Fig. 4. The bag 7 does not hang outside the plate 1 and is not dragged by objects when the pet 6 moves. The restriction area 25 is located at the root portion of the tail 60 and the adjustment unit 5 is moved toward the plate 1 until the restriction area 25 becomes smaller and the two top wings 13, 14 snugly contact the bottom of the pet 6. The two respective connection members 35, 45 of the left-leg belt 3 and the right-leg belt 4 extend between two rear legs 61, 62 of the pet 6 and are connected to the mounting portions 21. Therefore, the mounting area 26 is pulled to be a triangular area as shown in Fig. 5 and the strip 2 is secured. The through hole 10 of the plate 1 is aligned with anus 65 of the pet 6. The present invention is suitable for different types of dogs with different positions of the anuses, when the feces 68 are directly collected in the bag 7 which can be separated from the plate 1 and discarded.

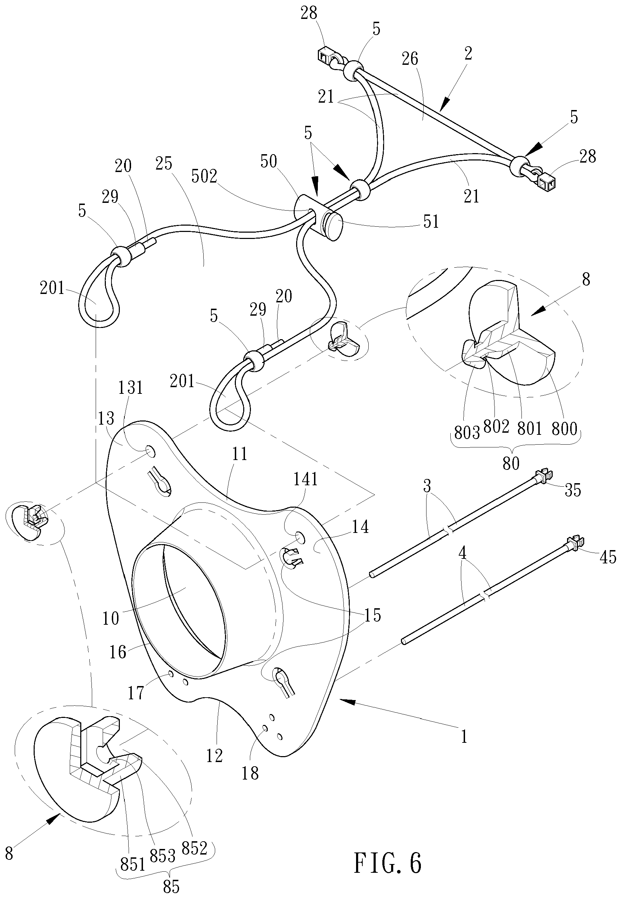

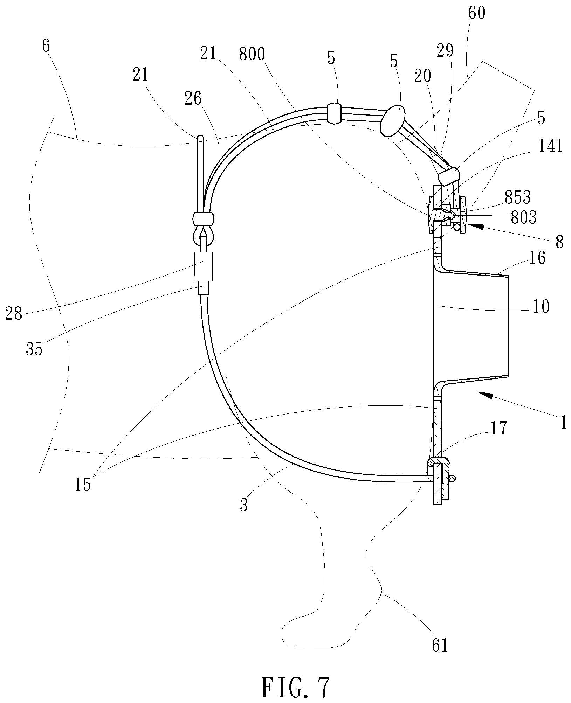

Figs. 6 and 7 show another embodiment of the present invention, wherein the differences are that the loops 201 on the strip 2 are positioned to the ends of the strip 2 by two respective stop members 29 which can be deformable boards, glue, adhesive, wires and so on. The restriction sections 20 extend through two adjustment units 5 to form two loops 201. The mounting portions 21 each have multiple adjustment units 5 and a connector 28, wherein two adjustment units 5 restrict the connectors 28 which are connected to positioning members 35, 45 on the left and right leg belts 3, 4. The other difference is that the protruding positioning portions 131, 141 are changed to be circular holes which cooperate with engaging units 8.

Each of the engaging units 8 comprises a connection part 80 and a reception member 85. The connection part 80 comprises a disk 800 and a shank 801 extending centrally from one a side of the disk 800. The shank 801 has a groove 802 defined in the outer periphery thereof and a tapered engaging portion 803 is formed on the distal end thereof. The shank 801 extends through an entrance 852 of a protrusion 851 of the reception member 85. The engaging portion 803 is engaged with a reception room 853 of the protrusion 851 of the reception portion 85. The disk 800 of the connection part 80 and the protrusion 851 of the reception member 85 are located on two sides of the plate 1. The protrusion 851 is a tapered and hollow part, the entrance 852 communicates with the tapered engaging portion 803. The rest of the parts and the way of use are the same as the first embodiment and will not be described here.

While we have shown and described the embodiment in accordance with the present invention, it should be clear to those skilled in the art that further embodiments may be made without departing from the scope of the present invention defined by the appended claims.

## Claims

1. A pet feces collection device comprising:
a plate (1) having a recess (11) defined in a top edge of the plate (1) and the recess (11) being adapted to yield a tail (60) of a pet (6), the plate (1) being adapted to be located at a bottom of the pet (6), the plate (1) having two positioning portions (131), (141) and the recess (11) located between the two positioning portions (131), (141), a through hole (10) defined through the plate (1) and being not in communication with the recess (11), the through hole (10) of the plate (1) being adapted to be aligned with anus (65) of the pet (6);
a left-leg belt (3) and a right-leg belt (4) connected to two corners of a lower portion of the plate (1), each of the left-leg belt (3) and the right-leg belt (4) having a connection member (35), (45), the two connection members (35), (45) of the left-leg belt (3) and the right-leg belt (4) being adapted to extend between two rear legs (61), (62) of the pet (6);
wherein collection device further comprises a strip (2) having two ends each of which is connected to one of the two positioning portions (131), (141) of the plate (1), a middle portion of the strip (2) extending through an adjustment unit (5) to form an enclosed mounting portion (21) and two restriction sections (20), the adjustment unit (5) located between the mounting portion (21) and the two restriction sections (20) which are connected to the plate (1), a mounting area (26) being defined by the mounting portion (21), a restriction area (25) being defined between the adjustment unit (5), the two restriction sections (20) and the plate (1);
the connection members (35), (45) of the left-leg belt (3) and the right-leg belt (4) being connected to the mounting portion (21) of the strip (2), the restriction area (25) being adapted to be mounted to the pet (6) with the tail (60) extending through the restriction area (25), the mounting area (26) being pulled to be a triangular area, and wherein the plate (1) has multiple clip portions (15) located around the through hole (10) so as to secure a periphery (70) of an opening of a bag (7).

2. The device as claimed in claim 1, wherein the plate (1) has an extension portion (16) located around the through hole (10) so as to accommodate a bag (7), the adjustment unit (5) is a single unit and movable along the strip (2), the adjustment unit (5) comprises a body (50), a movable member (51) and a spring which is located between the body (50) and the movable member (51), three mounting portions (21) have multiple adjustment units (5) and two connectors (28) movably connected thereto, two of the adjustment units (5) restrict the connectors (28) which are connected to positioning members (35), (36) on the left and right leg belts (3), (4), two ends of the strip (2) each have a loop (201) formed thereto and the two respective loops (201) are connected to the two positioning portions (131), (141) of the plate (1) directly or indirectly, the two ends of the strip (2) are connected to the restriction sections (20) by two respective stop members (29), the restriction sections (20) extend through the two adjustment units (5) and are formed to be the two loops (201), the two loops (201) mounted to two engaging units (8), each engaging unit (8) comprises a connection part (80) and a reception member (85), the connection part (80) comprises a disk (800) and a shank (801) extending centrally from a side of the disk (800), the shank (801) has a groove (802) defined in an outer periphery thereof and a tapered engaging portion (803) on a distal end thereof, the shank (801) extends through an entrance (852) of a protrusion (851) of the reception member (85), the engaging portion (803) is engaged with a reception room (853) of the protrusion (851) of the reception portion (85), the disk of the connection part (80) and the protrusion (851) of the reception member (85) are located on two opposing sides of the plate (1).

## Patentansprüche

1. Tierkotauffangvorrichtung umfassend:
eine Platte (1) mit einer Aussparung (11), die an einer oberen Kante der Platte (1) ausgebildet ist, und wobei die Aussparung (11) ausgestaltet ist, den Schwanz (60) eines Tieres (6) aufzunehmen, wobei die Platte (1) ausgestaltet ist, an einem Hinterteil des Tieres (6) platziert zu werden, wobei die Platte (1) zwei Positionierungselemente (131), (141) aufweist, und wobei die Aussparung (11) zwischen den zwei Positionierungselementen (131), (141) angeordnet ist, wobei eine Durchgangsöffnung (10) durch die Platte (1) hindurch ausgebildet ist und diese nicht mit der Aussparung (11) kommuniziert, wobei die Durchgangsöffnung (10) der Platte (1) derart ausgestaltet ist, mit dem Anus (65) eines Tieres (6) in einer Linie ausgerichtet zu sein,
einen Gurt für das linke Bein (3) und einen Gurt für das rechte Bein (4), die mit zwei Ecken eines unteren Bereichs der Platte (1) verbunden sind, wobei sowohl der Gurt für das linke Bein (3) als auch der Gurt für das rechte Bein (4) ein Verbindungselement (35), (45) aufweist, wobei die zwei Verbindungselemente (35), (45) des Gurts für das linke Bein (3) und des Gurts für das rechte Bein (4) ausgestaltet sind, zwischen zwei Hinterbeinen (61), (62) des Tieres (6) hindurch zu verlaufen,
wobei die Auffangvorrichtung ferner umfasst
einen Riemen (2) mit zwei Enden, von denen jedes mit einem der Positionierungselemente (131), (141) der Platte (1) verbunden ist, wobei ein Mittelbereich des Riemens (2) sich durch eine Verstelleinheit (5) hindurch erstreckt, um einen umschlossenen Halterungsbereich (21) und zwei Begrenzungsbereiche (20) zu bilden, wobei die Verstelleinheit (5) zwischen dem Halterungsbereich (21) und zwei Begrenzungsbereiche (20), welche mit der Platte (1) verbunden sind, angeordnet ist, wobei eine Halterungsfläche (26) durch den Halterungsbereich (21) definiert wird, wobei eine Begrenzungsfläche (25) zwischen der Verstelleinheit (5), den zwei Begrenzungsbereichen (20) und der Platte (1) definiert ist,
wobei die Verbindungselemente (35), (45) des Gurts für das linke Bein (3) und des Gurts für das rechte Bein (4) mit dem Halterungsbereich (21) des Riemens (2) verbunden sind, wobei die Begrenzungsfläche (25) ausgestaltet ist, an dem Tier (6) angebracht zu werden, indem der Schwanz (60) sich durch die Begrenzungsfläche (25) hindurch erstreckt, wobei die Halterungsfläche (26) mittels Zusammenziehens in eine dreieckige Fläche gebracht werden kann, und wobei die Platte (1) mehrere Klemmelemente (15) aufweist, die um die Durchgangsöffnung (10) herum angeordnet sind, um den Umfangsbereich (70) einer Öffnung eines Sacks (7) zu sichern.

2. Vorrichtung nach Anspruch 1, wobei die Platte (1) einen Ausdehnungsbereich (16) aufweist, der um die Durchgangsöffnung (10) herum ausgebildet ist, um einen Sack (7) aufzunehmen, wobei die Verstelleinheit (5) eine einzelne Einheit ist und entlang dem Riemen (2) bewegbar ist, wobei die Verstelleinheit (5) einen Körper (50), ein bewegbares Element (51) und eine Feder, welche zwischen dem Körper (50) und dem bewegbaren Element (51) ausgebildet ist, umfasst, wobei drei Halterungselemente (21) mehrere Verstelleinheiten (5) und zwei Verbinder (28), die mit diesem bewegbar verbunden sind, aufweist, wobei zwei der Verstelleinheiten (5) die Verbinder (28), welche mit dem Positionierungselementen (35), (36) der Gurte für das linke und das rechte Bein (3), (4) verbunden sind, einschränken, wobei zwei Enden des Riemens (2) jeweils eine an diesem ausgebildete Schlaufe (201) aufweisen, wobei die jeweiligen zwei Schlaufen (201) mit den zwei Positionierungselementen (131), (141) der Platte (1) direkt oder indirekt verbunden sind, wobei die zwei Enden des Riemens (2) mit den Begrenzungsbereichen (20) über zwei jeweilige Stoppelemente (29) verbunden sind, wobei die Begrenzungsbereiche (20) sich durch die zwei Verstelleinheilen (5) hindurch erstrecken und als die zwei Schlaufen (201) geformt sind, wobei die zwei Schlaufen (201) an den zwei Eingriffseinheiten (8) angebracht sind, wobei jede Eingriffseinheit (8) einen Verbindungsteil (80) und einen Aufnahmeteil (85) aufweist, wobei der Verbindungsteil (80) eine Scheibe (800) und einen Schaft (801) aufweist, der sich zentral von einer Seite der Scheibe (800) erstreckt, wobei der Schaft (801) eine Nut (802), die an einem äußeren Umfangsbereich desselben ausgebildet ist, und einen verjüngten Eingriffsbereich (803) an einem Distalende desselben aufweist, wobei der Schaft (801) sich durch einen Aufnahmebereich (852) eines Vorsprungs (851) des Aufnahmeelements (85) erstreckt, wobei der Eingriffsbereich (803) mit einem Aufnahmeraum (853) des Vorsprungs (851) des Aufnahmeelements (85) kuppelt, wobei die Scheibe des Verbindungsbereichs (80) und der Vorsprung (851) des Aufnahmeelements (85) an zwei gegenüberliegenden Seiten der Platte (1) angeordnet sind.

## Revendications

1. Dispositif de collecte d'excréments d'animaux de compagnie comprenant :
une plaque (1) qui a un évidement (11) défini dans un bord supérieur de la plaque (1) et l'évidement (11) étant adapté pour céder le passage à la queue (60) d'un animal de compagnie (6), la plaque (1) étant adaptée pour être située sur le derrière de l'animal de compagnie (6), la plaque (1) ayant deux portions de positionnement (131). (141) et l'évidement (11) situé entre les deux portions de positionnement (131), (141), un trou traversant (10) défini à travers la plaque (1) et ne communiquant pas avec l'évidement (11), le trou traversant (10) de la plaque (1) étant adapté pour être aligné avec l'anus (65) de l'animal de compagnie (6) ;
une courroie de patte gauche (3) et une courroie de patte droite (4) reliée à deux coins d'une portion inférieure de la plaque (1), chacune des courroies, la courroie de patte gauche (3) et la courroie de patte droite (4) ayant un organe de connexion (35), (45), les deux organes de connexion (35), (45) de la courroie de patte gauche (3) et de la courroie de patte droite (4) étant adaptés pour s'étendre entre deux pattes postérieures (61), (62) de l'animal de compagnie (6), le dispositif de collecte comprenant de plus
une bande (2) qui a deux extrémités dont chacune est reliée à l'une des deux portions de positionnement (131), (141) de la plaque (1), une portion du milieu de la bande (2) s'étendant à travers une unité de réglage (5) pour former une portion de montage enfermée (21) et deux sections de limitation (20), l'unité de réglage (5) étant située entre la portion de montage (21) et les deux sections de limitation (20) qui sont reliées à la plaque (1), une zone de montage (26) étant définie par la portion de montage (21), une zone de limitation (25) étant définie entre l'unité de réglage (5), les deux sections de limitation (20) et la plaque (1), les organes de connexion (35), (45) de la courroie de patte gauche (3) et de la courroie de patte droite (4) étant reliées à la portion de montage (21) de la bande (2), la zone de limitation (25) étant adaptée pour être montée à l'animal de compagnie (6) avec la queue (60) qui s'étend à travers la zone de limitation (25), la zone de montage (26) étant tirée pour être une zone triangulaire et la plaque (1) ayant de multiples portions de clip (15) situées autour du trou traversant (10) de manière à sécuriser une périphérie (70) d'une ouverture d'un sac (7).

2. Dispositif selon la revendication 1, la plaque (1) ayant une portion d'extension (16) située autour du trou traversant (10) de manière à loger un sac (7), l'unité de réglage (5) étant une seule pièce et mobile le long de la bande (2), l'unité de réglage (5) comprenant un corps (50), un élément mobile (51) et un ressort qui est situé entre le corps (50) et l'élément mobile (51), trois portions de montage (21) ayant de multiples unités de réglage (5) et deux connecteurs (28) reliés de manière mobile à celles-ci, deux des unités de réglage (5) limitant les connecteurs (28) qui sont reliés aux organes de positionnement (35, 36) sur la courroie de patte gauche (3) et la courroie de patte droite (4), deux extrémités de la bande (2) ayant chacune une boucle (201) formée sur celles-ci et les deux boucles respectives (201) étant reliées directement ou indirectement aux deux portions de positionnement (131), (141) de la plaque (1), les deux extrémités de la bande (2) étant reliées aux sections de limitation (20) par deux organes d'arrêt respectifs (29), les sections de limitation (20) s'étendant à travers les deux unités de réglage (5) et étant formées pour être les deux boucles (201), les deux boucles (201) étant montées à deux unités d'engrènement (8), chaque unité d'engrènement (8) comprenant une partie de connexion (80) et un organe de réception (85), la partie de connexion (80) comprenant un disque (800) et une tige (801) qui s'étend de manière centrale à partir d'un côté du disque (800), la tige (801) ayant une rainure (802) définie dans une périphérie extérieure de celle-ci et une portion d'engrènement effilée (803) sur une extrémité distale de celle-ci, la tige (801) s'étendant à travers une entrée (852) d'une saillie (851) de l'organe de réception (85), la portion d'engrènement (803) étant en prise avec un espace de réception (853) de la saillie (851) de la portion de réception (85), le disque de la partie de connexion (80) et la saillie (851) de l'organe de réception (85) étant situés sur deux côtés opposés de la plaque (1).
